**Europäisches Patentamt**

**European Patent Office**

**Office européen des brevets**

(19)

(11) Veröffentlichungsnummer: **0 431 546 A1**

(12) # EUROPÄISCHE PATENTANMELDUNG

(21) Anmeldenummer: **90123186.0**

(22) Anmeldetag: **04.12.90**

(51) Int. Cl.⁵: **F16H 1/14**, F01L 1/02

(30) Priorität: **06.12.89 DE 3940318**
**16.05.90 DE 4015743**
**02.07.90 DE 4021024**

(43) Veröffentlichungstag der Anmeldung:
**12.06.91 Patentblatt 91/24**

(84) Benannte Vertragsstaaten:
**AT BE CH DE DK ES FR GB GR IT LI LU NL SE**

(71) Anmelder: **IRM ANTRIEBSTECHNIK GmbH**
**Liebigstrasse 39**
**W-7105 Leingarten(DE)**

(72) Erfinder: **Reitz, Johannes**
**Wormser Strasse 31**
**W-7100 Heilbronn(DE)**

(74) Vertreter: **Müller, Hans**
**Lerchenstrasse 56**
**W-7100 Heilbronn(DE)**

(54) **Antriebsübertragung für Nebenaggregate.**

(57) Eine lageunabhängige Antriebsübertragung von einer antreibenden zu einer angetriebenen Welle erfolgt mittels einer Königswelle. Sie ist gegekennzeichnet durch eine Welle (20), die in einer Büchse (18) längsverschieblich geführt ist. Die Büchse und die Welle sind dabei mit den jeweils ihnen benachbarten Kegelrädern (16,50) drehfest verbunden. Der in Längsrichtung der Welle (20) zwischen dieser und der Büchse (18) vorhandene Zwischenraum (24), der für die Längenausdehnung der Welle (20) vorhanden ist, ist mit einem Hydrauliköl befüllbar. Der in dem Zwischenraum (24) herrschende Öldruck ist durch Regeln der in dem Zwischenraum jeweils vorhandenen Ölmenge beliebig einstellbar.

FIG. 1

EP 0 431 546 A1

## ANTRIEBSÜBERTRAGUNG FÜR NEBENAGGREGATE

TECHNISCHES GEBIET

Die Erfindung betrifft eine Antriebsübertragung von einer antreibenden zu einer angetriebenen Welle für Nebenaggregate beispielsweise bei Kraftfahrzeugen. Ein derartiges Nebenaggregat kann z. B. eine Wasserpumpe oder insbesondere auch eine obenliegende Nockenwelle einer Brennkraftmaschine sein.

STAND DER TECHNIK

Die meisten Verbrennungsmotoren von Kraftfahrzeugen besitzen eine oder mehrere im Kopf angeordnete Nockenwellen für die Ventilbetätigung. Der Antrieb erfolgt heutzutage von der Kurbelwelle ausgehend über Ketten oder Zahnriemen. Während die Kette im Ölbereich des Motors angeordnet ist, befindet sich der Zahnriemen außerhalb des Ölbereiches. Der Zahnriemen muß vor Öl und Staub geschützt werden und läuft daher in einem ihn umgebenden Gehäuse.

Sowohl die Kette als auch der Zahnriemen sind Längentoleranzen und Längenänderungen unterworfen. Nicht nur diese Längentoleranzen, sondern auch die Funktion, also die einwandfreie Übertragung zeitlich zwingender Abläufe, erfordern eine Kette bzw. einen Zahnriemen, die jeweils unter einer konstanten, vorbestimmten Längsspannung stehen. Dies macht eine entsprechende Vorspannung und die Möglichkeit für einen Längenausgleich der Kette bzw. des Zahnriemens erforderlich.

Die Spannvorrichtung für die Kette bzw. den Zahnriemen muß so abgestimmt sein, daß Kette oder Zahnriemen nicht zuwenig aber auch nicht zuviel vorgespannt sind. Die in ihrer Masse schwerere Kette benötigt, um Schwingungen abzubauen, eine oder mehrere Führungsschienen. Auch der Zahnriemen muß je nach Länge einmal oder mehrmals abgestützt werden. Erfolgt die Vorspannung in beiden Fällen durch eine mechanisch festgesetzte Spannvorrichtung, entsteht je nach Abstand zwischen Kurbelwelle und Nockenwelle bzw. Werkstoff von Kurbelgehäuse und Zylinderkopf unter Umständen eine erhebliche Zu- oder Abnahme der Vorspannung im Betrieb oder im Stillstand bei Kälte, was in beiden Fällen zur Zerstörung des Zahnriemens führen kann. Bei der in der Zerreißfestigkeit höheren Kette kann es infolge dieser Zu- oder Abnahme der auf sie wirkenden Vorspannung zu Verspannungen in ihrem Lager führen.

Diese Gründe sprechen für eine federbelastete, oft mit Stoßdämpfern ausgerüstete Spannvorrichtung. Das Überspringen eines oder mehrerer Zähne kann unter Umständen zur Zerstörung des Motors führen.

Neben dem Problem der Vorspannung ist insbesondere beim Zahnriemen die Fluchtung von Kurbelwelle und Nockenwelle und der entsprechenden Zahnräder wichtig, weil sonst der Zahnriemen axial wandern und ständig an der Begrenzungsscheibe anlaufen oder vom Zahnriemenrad ablaufen würde. Der Zahnriemen hat gegenüber der Kette dennoch den Vorteil, daß er subjektiv ihr gegenüber kostengünstiger zu sein scheint. Die Kette hat demgegenüber den Vorteil einer längeren Lebensdauer und einer geringeren Wartung. In allen Fällen ist aber der Aufwand und die Sorgfalt, die beim Zahnriemen wie bei der Kette in Konstruktion und Fertigung aufgebracht werden müssen, recht erheblich. Insbesondere, wenn es sich um Motore mit senkrecht stehenden Wellen handelt, wird durch den Einfluß der Gravitation die Problematik naturgemäß noch komplexer.

Der infolgedessen erforderliche und für einen Motor mit obenliegender Nockenwelle auch getriebene recht erhebliche Aufwand erscheint gerechtfertigt, da ein derartiger Motor gegenüber anderen Motorkonstruktionen in der Regel höhere Leistung, weniger mechanisch bewegte Teile, akustisch günstiger und gewichtsmäßig leichter ist.

Vor mehreren Jahrzehnten sind Rennmotore konstruiert worden, bei denen zwischen ihrer Kurbel- und Nockenwelle eine Königswelle zur Antriebsübertragung verwendet worden ist. Der dafür erforderlich werdende konstruktive Aufwand war derart erheblich, daß sich diese Konstruktion nur im Rennmotorenbau rechtfertigen ließ. Trotz aller konstruktiven Anstrengungen waren derartige Motore aber recht laut, insbesondere auch weil sich das Spiel zwischen den bei dieser Antriebsübertragung erforderlichen Zahnräder nicht oder in nicht allen Betriebszuständen ausgleichen ließ.

DARSTELLUNG DER ERFINDUNG

Ausgehend von diesem vorbekannten Stand der Technik liegt der Erfindung die Aufgabe zugrunde, eine lageunabhängige Antriebsübertragung für Nebenaggregate und insbesondere für eine obenliegende Nockenwelle anzugeben, bei der die im Stand der Technik aufgezeigte Problematik auf möglichst wirtschaftlich einfache und technisch zufriedenstellende Weise gelöst wird.

Diese Erfindung ist für die eingangs genannte Antriebsübertragung durch die Merkmale des Patentanspruchs 1 gegeben. Eine derartige lageunabhängige Antriebsübertragung zeichnet sich dementsprechend dadurch aus, daß die eine Königswelle darstellende Welle in einer Büchse längsverschieblich geführt wird. Die Büchse ist dabei mit dem ersten Kegelradpaar und die Welle mit dem zweiten Kegelradpaar oder umgekehrt die Büchse mit dem zweiten Kegelradpaar und die Welle mit dem ersten Kegelradpaar drehfest verbunden. Ferner ist der in Längsrichtung der Welle zwischen dieser Welle und der Büchse vorhandene Zwischenraum, der für die Längenausdehnung der Welle benötigt wird, mit einem Hydrauliköl befüllbar. Durch Regeln der in dem Zwischenraum jeweils vorhandenen Ölmenge kann der in dem Zwischenraum herrschende Öldruck beliebig eingestellt werden. Diese Abstimmung kann mit Hilfe von bekannten Mitteln relativ genau erfolgen, so daß das Abwälzen der Zähne der vorhandenen Zahnräder ohne zusätzliche Reibung erfolgen kann. Während sich bei der Kette oder bei dem Zahnriemen eine Änderung der Vorspannung bei unterschiedlichen Betriebstemperaturen nicht vermeiden läßt, besteht durch die zwängungsfreie Anordnung der Verbindungswelle der Vorteil, daß keine Änderung der Abwälzverhältnisse bei den jeweils in Eingriff miteinander stehenden Zahnräder auftritt. Bei Aufrechterhalten eines konstanten Öldrucks können somit naturbedingte Längenänderungen der Verbindungswelle zwischen den beiden Zahnradpaaren zu keinen Zwängungskräften führen. Darüber hinaus können auch alle Ungleichförmigkeiten, die vom Lauf der Nockenwelle herkommen, spielfrei auf die Verbindungswelle übertragen werden. Insgesamt wird somit eine lageunabhängige und äußerst geräuscharme Antriebsübertragung geschaffen.

Eine konstruktiv einfache Lösung für eine derartige Antriebsübertragung bei einem Otto- oder Dieselmotor mit obenliegender Welle zeichnet sich dadurch aus, daß ein Kegelradpaar als Ölpumpenräder einer Drucköl-Schmierpumpe ausgelegt wird, so daß mittels eines im Hydrauliköl-Leitungskreis eingebauten Druckhalteventil bzw. Druckregelventil das Zahnspiel zwischen den Zahnrädern ausgeglichen werden kann. Das Ölpumpenradpaar sorgt dabei für eine Dämpfung der von den Nocken der Nockenwelle verursachten Drehschwingungen. Die zur Kraftübertragung eingesetzte Welle und die dieselbe antreibenden Zahnräder können darüber hinaus auch für die erforderliche Schmierung der Lagerung der Verbindungswelle und auch insbesondere für die Schmierung des Zylinderkopfes verwendet werden. Ferner hat es sich als vorteilhaft herausgestellt, die verwendeten Kegelräder im Sinter-, Kunststoff- bzw. Kaltfließpreßverfahren herzustellen. Dadurch ergibt sich eine wartungsfreie, leicht montierbare, billige und geräuscharme Antriebsübertragung.

Mit der erfindungsgemäßen Antriebsübertragung können sehr große in Längsrichtung der Verbindungswelle auftretende Axialkräfte wirkungsvoll abgepuffert werden. Diese Axialkräfte treten durch das Anlaufen der Nocken der Nockenwelle auf die Tassenstößel oder ähnliche Ventilsteuereinrichtungen auf. Dadurch entsteht ein Drehmomentanstieg an den Antriebsrädern, wodurch infolge des Kegelwinkels der Kegelradantriebsübertragung von Kurbelwelle auf Nockenwelle eine in Richtung der Verbindungswelle wirkende Axialkraft entsteht. Diese Axialkraft, die durch Auf- und Ablauf der Hocken der Nockenwelle hervorgerufen wird und positiv und negativ ist, verursacht durch den Anlagewechsel der Zahnflanken zwischen den Zahnrädern Geräusche, die mit größerwerdendem Zahnflankenspiel anwachsen.

Eine ganz wesentliche Weiterbildung der Erfindung zeichnet sich nun dadurch aus, daß zumindest ein Pufferraum im Bereich zwischen dem mit der Kurbelwelle drehfest verbundenen Kegelrad und mit dem mit der Nockenwelle drehfest verbundenen Kegelrad vorhanden ist, wobei dieser Pufferraum über eine Bohrung mit dem Hydrauliköl befüllbar ist und der Rückfluß dieses Hydrauliköls aus dem Pufferraum in die Bohrung zurück durch ein Rückschlagventil verhindert wird. Dieser Pufferraum kann volumenmäßig sehr klein ausgebildet werden, so daß bereits kleine axiale Verstellungen der Verbindungswelle durch das vorhandene Hydrauliköl in dem Pufferraum wirksam verhindert bzw. abgedämpft werden können. Prinzipiell ist diese Pufferwirkung auch mit dem eingangs beschriebenen, am stirnseitigen Ende der Verbindungswelle vorhandenen, ebenfalls mit Hydrauliköl gefüllten Zwischenraum möglich. Dadurch, daß dieser Zwischenraum aber relativ groß sein muß, um den erforderlichen Längenausgleich infolge Fertigungstoleranzen, Wärmeausdehnung und dergleichen zuzulassen, ist eine entsprechend große Hydraulikölmenge in dem Zwischenraum und in seinen Zuleitungskanälen vorhanden. Da in dem Hydrauliköl unvermeidbar eine wenn auch geringe Menge an Luft regelmäßig vorhanden ist, die im Unterschied zum Hydrauliköl kompressibel ist, tritt die gewünschte Verhinderung der axialen Längsverschiebung der Verbindungswelle, d. h. die gewünschte Pufferwirkung, erst nach einer bestimmten axialen Verstellung dieser Verbindungswelle auf und zwar erst dann, wenn das Volumen des Zwischenraums um das in dem Hydrauliköl vorhandene Luftvolumen durch die Bewegung der Verbindungswelle entsprechend verkleinert worden ist. Bei einem entsprechenden kleinen Puffer-raum, in dem entsprechend wenig Hydrauliköl vorhanden ist, ist diese die Pufferwirkung verzögernde Luftmenge entsprechend klein. Es ist daher ganz wichtig, daß der für die Pufferwirkung herangezogene Pufferraum möglichst klein ist, d. h., daß die bei der axialen Verstellung der Welle zusammendrückbare Ölmenge volumenmäßig ebenfalls möglichst klein ist. Die Erfindung geht daher auch von der Erkenntnis aus, daß dieser Pufferraum zusätzlich zu dem eingangs offenbarten Zwischenraum vorhanden und möglichst klein sein sollte. Dies wird durch einen längs der Verbindungswelle zusätzlich vorhandenen Pufferraum verwirklicht.

Dieser Pufferraum ist nach einer Weiterbildung der Erfindung ein die Welle umgebender Ringraum, der mit einem schulterartigen Rücksprung der Wandung der Welle zusammenwirkt. Um die in dem Hydrauliköl - wie vorstehend beschrieben - unvermeidliche Luftmenge aus dem Pufferraum bzw. Ringraum heraus und aus dem Leitungssystem heraustreten zu lassen, hat es sich als vorteilhaft herausgestellt, den Pufferraum bzw. Ringraum mit einer Öffnung nach außen in Form eines den Pufferraum umgebenden Spielspalts auszubilden. Durch diesen Spielspalt kann dann die Luft zusammen mit einer gewissen Menge von Hydrauliköl aus dem Leitungssystem nach außen hin entweichen.

Das in dem Pufferraum bzw. in der in diesen hineinführenden Hydraulikleitung erforderliche Rückschlagventil, mit dem verhindert wird, daß Hydrauliköl aus dem Pufferraum in das Leitungssystem zurückströmt, ist bei der Ausbildung des Pufferraums als ein die Verbindungswelle umgebenden Ringraum in sehr einfacher konstruktiver Weise durch einen O-Ring verwirklicht. Dieser O-Ring verschließt die ringraumseitige Öffnung der von dem Ringraum in die Längsbohrung der Verbindungswelle führenden Bohrung dann, wenn der O-Ring bei entsprechend großem auf das Hydrauliköl einwirkenden Druck entsprechend zusammengequetscht und damit verformt wird. Im Normalzustand, d. h., in einem Zustand, in dem keine Längsverschiebung der Verbindungswelle und damit keine Axialdrücke auf das Hydrauliköl einwirken, ist der O-Ring im Querschnitt unverformt, wobei er in dieser seiner Querschnittsform die in den Pufferraum einmündende Öffnung der zur Längsbohrung der Verbindungswelle führenden Verbindungsbohrung nicht verschließt.

Sofern dieser Pufferraum nicht über die Längsbohrung der Verbindungswelle, sondern über eine separate Bohrung mit Hydrauliköl versorgt wird, kann das entsprechende Rückschlagventil in dieser Verbindungsbohrung angebracht sein. Das Rückschlagventil kann dabei in ansich bekannter Art und Weise ausgebildet sein und so beispielsweise mit einem Verschlußorgan in Form einer Kugel, die über eine Feder in Gegenstromrichtung gegen einen im Verbindungskanal ausgebildeten Ventilsitz drückend anliegt. Die Kugel und die Feder können dann von einer hutartigen Kappe umgeben sein, die sich bei anwachsendem Druck im Pufferraum flüssigkeitsdicht an dem Ventilsitz anlegt.

Weiterbildungen und vorteilhafte Ausführungsformen der Erfindung ergeben sich durch die in den Unteransprüchen ferner angegebenen Merkmale sowie durch die nachstehenden Ausführungsbeispiele.

Dabei zeigt sich insbesondere, daß die erfindungsgemäße Antriebsübertragung den Vorteil hat, daß Spanneinrichtungen, Toleranzausgleich, Schienen und Abdeckhaube sowie irgendwelche Einstellvorrichtungen, Prüfungen und Nachstellarbeiten des im Stand der Technik zur Antriebsübertragung vorhandenen Zahnriemens oder der verwendeten Ketten entfallen können.

KURZE BESCHREIBUNG DER ZEICHNUNG

Die Erfindung wird im folgenden anhand der in der Zeichnung dargestellten Ausführungsbeispiele näher beschrieben und erläutert. Es zeigen:

Fig. 1 einen Längsschnitt durch eine erfindungsgemäße Antriebsübertragung zwischen einer Kurbelwelle und Nokkenwelle,

Fig. 2 einen Querschnitt durch ein die Nokkenwelle antreibendes Kegelrad und dessen Lagerung im Zusammenhang mit der zu einer Kurbelwelle führenden Verbindungswelle, zusammen mit einer ersten Aubildung für einen Pufferraum und

Fig. 3 einen Querschnitt durch ein Kegelrad entsprechend Fig. 1 mit einem anderen Pufferraum.

WEGE ZUR AUSFÜHRUNG DER ERFINDUNG

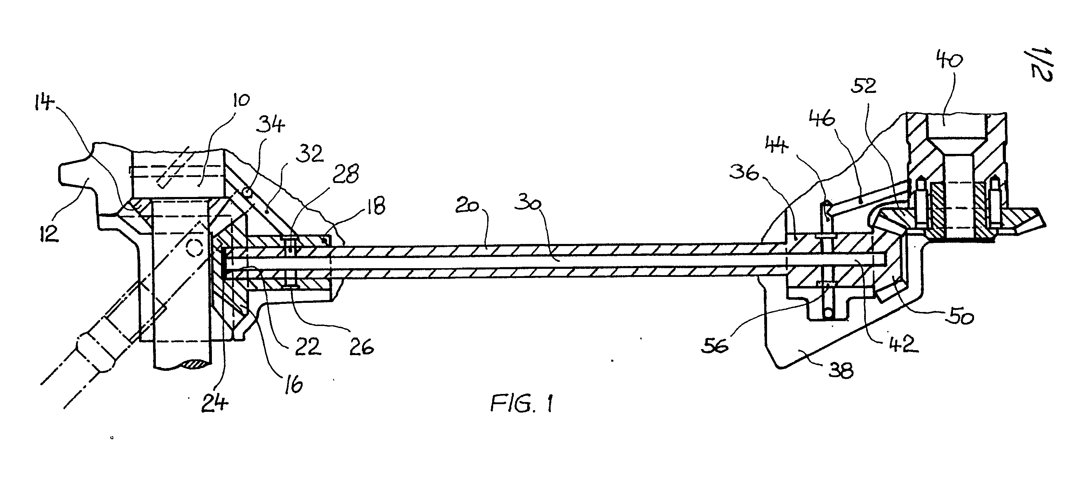

In der Fig. 1 ist das - in der Zeichnung untere - Ende einer Kurbelwelle 10 in einem Lagerblock 12 gelagert. Auf der Kurbelwelle 10 ist ein erstes Kegelrad 14 drehfest befestigt. Ein zweites Kegelrad 16 steht in kämmendem Eingriff mit dem Kegelrad 14. Das Kegelrad 16 besitzt einen rechtwinklig von demselben wegstehenden Ansatz, der als ein Lagerzapfen 18 ausgebildet ist. In diesen Lagerzapfen 18 greift eine Verbindungswelle 20 ein, die innerhalb des Lagerzapfens 18 längsverschieblich, in zur Längserstreckung der Kurbelwelle 10 senkrechter Richtung, gehalten ist. Zwischen der in der Zeichnung linken Stirnseite 22 der Welle 20 sowie dem Kegelrad 16 ist ein Zwischenraum 24 vorhanden. Dieser Zwischenraum ist unterschiedlich groß, in Abhängigkeit von der jeweiligen tatsächlichen Länge der Verbindungswelle 20. Der Lagerzapfen 18 ist im vorliegenden Beispielsfall voll in den Lagerblock 12 integriert. An der Außenseite des Lagerzapfen 18 ist eine quer um ihn herumlaufende Nut 26 vorhanden, von der eine Querbohrung 28 in das Innere der Verbindungswelle 20 hineinführt. Diese Bohrung 28 ist mit einer Längsbohrung 30 verbunden, die längs durch die Welle 20 hindurchreicht. Die Bohrung 28 ist über eine weitere Bohrung 32 mit einer nicht näher dargestellten Ölversorgung verbunden. Innerhalb der Bohrung 32 ist ein Druckhalteventil bzw. Druckregelventil 34 angeordnet, dessen Zweck noch weiter unten beschrieben wird.

Das - in der Fig. 1 rechte - andere Ende der Verbindungswelle 20 ist in einem Lagerzapfen 36 fest angeordnet. Dieser Lagerzapfen 36 ist in einem Lagerblock 38 vorhanden, in dem auch eine Nockenwelle 40 drehbar gelagert ist. Der Lagerzapfen 36 ist ähnlich wie der Lagerzapfen 18 hohlzylindrisch ausgebildet, wobei seine Längsbohrung 42 mit der in der Verbindungswelle 20 vorhandenen Längsbohrung 30 fluchtet. Quer durch den Lagerzapfen 36 reicht eine Querbohrung 44 in die Längsbohrung 42 hinein. Diese Längsbohrung 44 hat eine kanalmäßige Fortführung in einer weiteren Bohrung 46, die zum Lager der Nockenwelle führt. Durch Zuführung von Hydrauliköl durch die Bohrung 32 und die Bohrung 28 in die Längsbohrung 30 der Verbindungswelle 20 hinein wird sowohl der Zwischenraum 24 als auch der Bereich der Längsbohrung 42 im rechten Lagerzapfen 36 mit dem Hydrauliköl gefüllt. Durch die Bohrungen 40, 46 tritt dieses Hydrauliköl dann in den Zylinderkopf mit der Nockenwelle 40, so daß auch dort dieses Öl zum Schmieren des Zylinderkopfes zur Verfügung steht.

Der rechte Lagerzapfen 36 ist einstückig mit einem dritten Kegelrad 50 verbunden, das in dem Lagerblock 38 gelagert ist. Dieses Kegelrad 50 steht in kämmendem Eingriff mit einem vierten Kegelrad 52, das drehfest auf der Nockenwelle 40 vorhanden ist.

Durch die Bohrung 32, 28 in die Verbindungswelle 20 gelangtes Hydrauliköl füllt damit den Zwischenraum 24 und das Innere der Verbindungswelle 20 und des Lagerzapfens 36 aus. Über eine Nut 56 wird der Lagerzapfen 36 geschmiert. Durch die Bohrungen 44, 46 wandert das Hydrauliköl in die Lagerstellen der Nockenwelle 40 sowie in nicht näher dargestellter Weise in die zur Versorgung der Stößel vorhandenen Kanäle. Die Verbindungswelle 20 und das dritte Kegelrad 50 bilden in vorliegendem Beispielsfall ein einstückiges Teil. Der Zwischenraum 24 enthält ebenfalls Hydrauliköl, das die Verbindungswelle 20 von dem Kegelrad 16 weg und in Richtung auf die Nockenwelle 40 hindrückt. Auf diese Weise entsteht eine Kraft, die das zweite Kegelrad 16 und das dritte Kegelrad 50 in die Zahnflanken der mit ihnen jeweils korrespondierenden Kegelräder 14 und 52 drückt. Diese Kraft ist größenmäßig abhängig von dem in dem Zwischenraum 24 herrschenden Öldruck und der Stirnfläche 22 der Verbindungswelle 20. Das in dem Zwischenraum 24 vorhandene Öl dient auch zur Schmierung des in dem Lagerzapfen 18 längsverschieblichen Endes der Verbindungswelle 20. Ferner werden durch diese mit Öl gefüllte Zwischenkammer 24 die radialen Ungleichförmigkeiten, die von der Nockenwelle 40 ausgehen und auf die Verbindungswelle 20 übertragen werden, gemildert und im Kegelradpaar 16, 14 über den vorhandenen Öldruck eliminiert. Die in dem Zwischenraum 24 vorhandene Ölmenge und der damit herrschende Öldruck kann durch Anpassen der durch die Bohrung 32 in die Verbindungswelle 20 jeweils eingeleiteten Ölmenge beliebig eingestellt werden. Das in der Ölzuleitung vorhandene Druckhalteventil bzw. Druckregelventil 34 dient dabei zur Dämpfung der Ungleichförmigkeiten des Ventiltriebes.

Mit der vorstehend beschriebenen Antriebsanordnung kann auf die Anordnung von Riemen oder Ketten verzichtet werden. Die erfindungsgemäße Antriebsanordnung beinhaltet den Antrieb über die beiden Kegelradpaare 14, 16 und 50, 52, von denen das eine Kegelradpaar, im Beispielsfall das Kegelradpaar 14, 16 als Drucköölschmierpumpe ausgelegt ist. Über das Kegelradpaar 14, 16 wird nicht nur Drucköl durch die Verbindungswelle und über das andere Kegelradpaar 50, 52 in den Zylinderkopf zur Schmierung der Nockenwelle und zur Versorgung des Ventiltriebes geleitet, sondern durch den jeweils herrschenden Öldruck werden die durch die Verbindungswelle 20 verbundenen Kegelräder 16 und 50 spielfrei in die korrespondierenden Kegelräder 14, 52 gedrückt. Die Abstimmung erfolgt dabei über den Öldruck. Dieser kann mit Hilfe von bekannten Mitteln relativ genau eingestellt werden, so daß das Abwälzen der Zähne ohne zusätzliche Reibung erfolgt. Die Abwälzverhältnisse sind damit völlig unabhängig von den jeweils herrschenden Betriebsbedingungen. Die zweckmäßigerweise in einem der korrespondierenden Kegelräder mit festem Sitz oder als Teil des Kegelrades angeordnete Verbindungswelle 20 kann nämlich alle Abstandsveränderungen aufnehmen, so daß bei konstantem Öldruck keine Änderung der Vorspannung aufgrund temperaturbedingter Längenänderungen stattfinden kann. Alle Ungleichförmigkeiten, die vom Lauf der Nockenwelle herrühren, werden spielfrei auf die Verbindungswelle 20 übertragen. Über eine querschnittsmäßig geeignete Kerbverzahnung, über ein Keilwellen-oder Polygonprofil von Welle 20 und Lagerzapfen 18 ist in radialer Richtung eine enge drehfeste Verbindung zwischen Welle und Lagerzapfen gegeben. Der durch Drucköl ausgefüllte Zwischenraum 24 dämpft die auftretenden Stöße, indem die axiale Länge des Zwischenraumes 24 so gewählt wird, daß an den seitlichen Austrittsöffnungen eine hohe Beschleunigung entsteht. Es wird damit durch geeignete Maßnahmen, etwa durch eine querschnittsmäßig nicht kreisrunde Ausbildung der Verbindungswelle 20 innerhalb des Lagerzapfens 18 sichergestellt, daß die Verbindungswelle 20 drehfest in dem Lagerzapfen 18 vorhanden ist. Bei den hier möglichen vielfältigen konstruktiven Ausbildungen muß jeweils sichergestellt sein, daß die Verbindungswelle 20 in axialer Richtung im Lagerzapfen 18 längsverschieblich vorhanden bleibt.

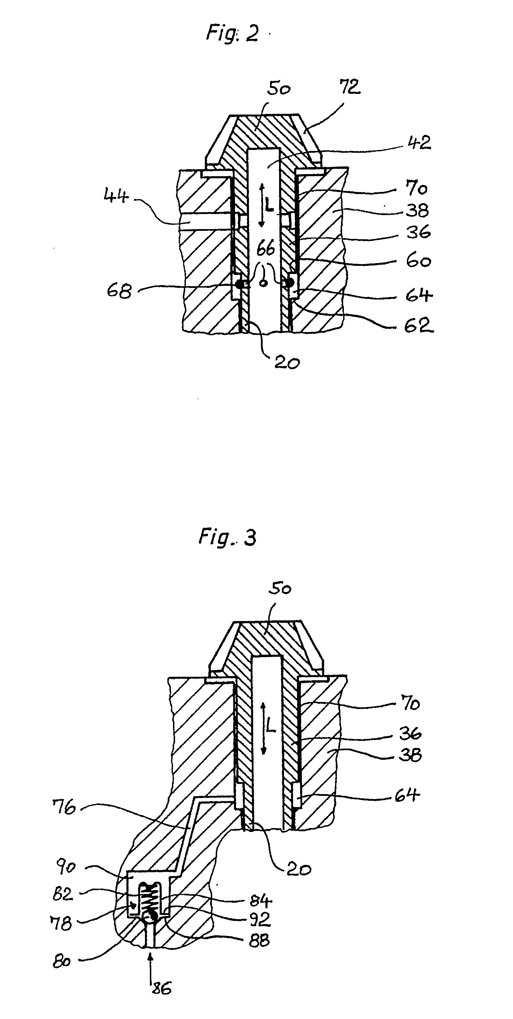

In Fig. 2 ist das nockenwellenseitige Ende der von der in Fig. 1 dargestellten Kurbelwelle zur Antriebsübertragung benutzten Verbindungswelle 20 dargestellt, die einstückig mit dem Lagerzapfen 36 verbunden ist. Am Übergang zwischen der Verbindungswelle 20 und dem Lagerzapfen 36 ist eine nach außen auskragende, umlaufende Schulter 60 vorhanden.

Der Lagerzapfen 36 ist einstückig mit dem Kegelrad 50 verbunden. In Längsrichtung L weisen die Verbindungswelle 20 und der Lagerzapfen 36 eine Längsbohrung 42 auf, die im Bereich des dritten Kegelrades 50 sackartig endet. Die Welle 20 und der Lagerzapfen 36 sind in einem Lagerblock 38 drehbar und in Längsrichtung L verschiebbar gelagert. Über eine Querbohrung 44 kann das in der Längsbohrung 42 vorhandene Hydrauliköl in Richtung Nockenwelle strömen.

Unterhalb der Schulter 60, d. h. in einem größeren Abstand als die Schulter 60 zum Kegelrad 50, besitzt der Lagerblock 38 eine einspringende, umlaufende Schulter 62. Zwischen der Schulter 60 und der Schulter 62 ist so ein Ringraum 64 vorhanden.

Dieser Ringraum 64 steht über einer Anzahl von Querbohrungen 66 mit der Längsbohrung 42 in Leitungsverbindung. Auf den Öffnungen der in den Ringraum 64 einmündenden Querbohrungen 66 liegt ein O-Ring 68 auf. Im Normalzustand, in dem dieser O-Ring 68 querschnittsmäßig nicht verformt ist, verschließt dieser O-Ring 68 die jeweilige Öffnung der einzelnen Querbohrungen 66 nicht vollkommen. Dadurch kann das in der Längsbohrung 42 vorhandene Hydrauliköl durch die Querbohrungen 66 hindurch in den Ringraum 64 strömen.

Über einen zwischen der Außenseite des Lagerzapfens 36 und der Innenseite des Lagerblockes vorhandenen Spielspalt 70 ist eine gewisse, planmäßig Leckage vorhanden, so daß das in dem Ringraum vorhandene Hydrauliköl nach außen durch den Spielspalt 70 hinaus entweichen kann. Durch die Leckage hindurch kann dabei insbesondere auch die in dem Hydrauliköl vorhandene Luft nach außen entweichen. Dieses Luftentweichen ist bei der senkrechten Ausrichtung der Verbindungswelle 20 problemlos nach oben durch den Spielspalt 70 hindurch möglich.

Durch Auf- und Ablaufen der an der Nockenwelle vorhandenen Nocken wirken Kräfte auf die Zahnflanken 72 des Kegelrades 50 ein, die das Kegelrad 50 in axialer Richtung der Verbindungswelle 20, d. h., in Längsrichtung L ausweichen lassen. Bei einer dabei auftretenden Axialbewegung der Welle 20 und damit auch des Lagerzapfens 36 nach unten übt der Lagerzapfen 36 über die an ihm angeformte Schulter 60 einen entsprechend großen Druck auf das in dem Ringraum 64 vorhandene Hydrauliköl aus. Durch diesen Druckanstieg wird der O-Ring 68 so verformt, daß er die Öffnungen der Querbohrungen 66 verschließt. Das unter Druck stehende Hydrauliköl des Ringraums 64 dämpft so den in Längsrichtung der Verbindungswelle 20 wirkenden Stoß, indem eine geringfügige Ölmenge durch den Spielspalt 70 hindurch nach außen abfließen kann.

Die Anordnung des Ringraums 64 in Nachbarschaft zum Kegelrad 50 hat den Vorteil, daß die auftretenden Axialstöße möglichst dicht beim Kegelrad 50 und damit an dem Ort, wo sie verursacht werden, abgebaut werden.

Bei der in Fig. 3 dargestellten Ausführungsform ist der Ringraum 64 über eine Zuleitungsbohrung 76 mit dem vorhandenen Hydrauliköl-Leitungskreislauf verbunden. Die in der Ringkammer 64 vorhandene Ölmenge und die darin enthaltene Luft kann wiederum über den Spielspalt 70 nach oben aus dem Lagerblock 38 entweichen. In der Zuleitungsbohrung 76 ist in einer Zwischenkammer 90 ein Rückschlagventil 78 eingebaut. In der bodenseitigen Einmündung der Zuleitungsbohrung 76 sitzt eine Kugel 80, die unter der Federspannung einer Schraubenfeder 82 steht. Die Schraubenfeder 82 stützt sich ihrerseits an einem hutartigen Formteil 84 ab.

Beim Zuströmen des Hydrauliköls in Richtung des Pfeils 86 wird die Kugel 80 - in der Zeichnung nach oben - gegen die Kraft der Feder 82 angehoben. Das Öl kann so durch die Leitung 76 hindurch in den Ringraum 64 strömen. Bei einer Abwärtsbewegung des Kegelrades 50 und damit auch des Lagerzapfens 36 wird eine entsprechende Druckkraft auf die in dem Ringraum 64 und in der Zuleitung 76 vorhandenen Hydraulikölmenge ausgeübt. Durch diesen Druckanstieg wird das Formteil 84 durch seine gegenüber der Kugelfläche größere Fläche mit seiner krempenartigen Ringfläche 92 flüssigkeitsdicht gegen den Boden 88 der Zwischenkammer 90 gepreßt. Ein Zurückfließen des in der Leitung 76 vorhandenen Öls in Gegenrichtung des Pfeils 84 ist daher nicht möglich. Das in dem Ringraum und in der Leitung 76 vorhandene Öl kann lediglich mit einer ganz geringen Teilmenge durch den Spielspalt 70 hindurch nach außen entweichen, so daß eine entsprechende Dämpfung der in axialer Richtung auftretenden Welle 20 eintritt. Auf diese Weise ist ein ruhiger stoßgedämpfter Nockenwellenantrieb mit vollautomatischer Anpassung an alle Betriebszustände möglich.

**Ansprüche**

1. Antriebsübertragung von einer antreibenden zu einer angetriebenen Welle für Nebenaggregate, mit
   - einem ersten Kegelradpaar (14, 16) mit einem ersten (14) und zweiten (16) Kegelrad, von dem das erste Kegelrad (14) mit der antreibenden Welle (10) drehfest verbunden ist,
   - einem zweiten Kegelradpaar (50, 52) mit einem dritten (50) und vierten (52) Kegelrad, von dem das vierte (52) Kegelrad mit der anzutreibenden Welle (40) drehfest verbunden ist,
   - einer Welle (20), die zwischen dem zweiten Kegelrad (16) des ersten Kegelradpaares und dem dritten Kegelrad (50) des zweiten Kegelradpaares angeordnet und mit diesen beiden Kegelrädern drehfest derart verbunden ist, daß bei Längenänderungen dieser Welle (20) keine Zwängungskräfte auf die Kegelräder einwirksam sind.
   **dadurch gekennzeichnet, daß**

   - die Welle (20) in einer Büchse (18) längsverschieblich geführt ist,
   - die Büchse (18) mit dem zweiten (16) und die Welle (20) mit dem dritten (50) Kegelrad oder umgekehrt die Büchse mit dem dritten und die Welle mit dem zweiten Kegelrad drehfest verbunden sind,
   - der in Längsrichtung der Welle (20) zwischen dieser Welle (20) und der Büchse (18) vorhandene Zwischenraum (24) der für die Längenausdehnung der Welle (20) vorhanden ist, mit einem Hydrauliköl befüllbar ist, und
   - der in dem Zwischenraum (24) herrschende Öldruck durch Regeln der in dem Zwischenraum jeweils vorhandenen Ölmenge beliebig einstellbar ist.

2. Antriebsübertragung nach Anspruch 1, **dadurch gekennzeichnet, daß** zumindest ein Kegelradpaar (14, 16) zur Schwingungsstoßdämpfung unter einem gesteuerten Öldruck steht.

3. Antriebsübertragung nach Anspruch 2, **dadurch gekennzeichnet, daß** zumindest ein Kegelradpaar (14, 16) als Ölpumpenräder einer Drucköl-Schmierpumpe ausgelegt ist.

4. Antriebsübertragung nach Anspruch 2 oder 3, **dadurch gekennzeichnet, daß** im Hydrauliköl-Leitungskreis ein Druckhalteventil bzw. Druckregelventil (34) vorhanden ist.

5. Antriebsübertragung nach Anspruch 4, **dadurch gekennzeichnet, daß** das Druckhalteventil bzw. Druckregelventil (34) in der Bohrungsleitung (32) vorhanden ist.

6. Antriebsübertragung nach Anspruch 1, **dadurch gekennzeichnet, daß**
   - eine Hülse (18) stumpf auf dem zweiten Kegelrad (16) befestigt ist, so daß das zweite Kegelrad (16) einen Boden für die Hülse bildet,
   - der Zwischenraum (24) zwischen dem zweiten Kegelrad (16) und der freien Stirnfläche (22) der Welle (20) mit dem Hydrauliköl befüllbar ist.

7. Antriebsübertragung nach Anspruch 6, **dadurch gekennzeichnet, daß** die Welle (20) mit ihrer anderen Stirnseite stumpf auf dem dritten (50) Kegelrad befestigt ist.

8. Antriebsübertragung nach Anspruch 1, **dadurch gekennzeichnet, daß**
   - die Welle (20) zumindest im Bereich der Büchse (18) eine zentrische Längsbohrung (30) aufweist,
   - durch die Büchse (18) und die Welle (20) eine Querbohrung (28) hindurchführt,
   - durch diese Querbohrung (28) das Hydrauliköl in den Zwischenraum (24) einleitbar ist.

9. Antriebsübertragung nach Anspruch 6 und 8, **dadurch gekennzeichnet, daß**
   - die zentrische Längsbohrung (30) durch die gesamte Welle (20) hindurchführt,
   - in den der Büchse (18) entgegengesetzten Endbereich der Welle eine zweite Querbohrung (44) hindurchführt, von der ein Kanal (46) wegführt zur Versorgung der diesem Endbereich benachbarten angetriebenen Welle (40) mit dem Hydrauliköl

10. Antriebsübertragung nach einem der Ansprüche 1 bis 9, **gekennzeichnet durch** ihre Verwendung als Nockenwellenantrieb für obenliegende Nockenwellen.

11. Antriebsübertragung nach Anspruch 10, **dadurch gekennzeichnet, daß** die zwischen den Kegelradpaaren vorhandene Welle (20) als Versorgungsleitung für den Zylinderkopf mit Hydrauliköl ausgebildet ist.

12. Antriebsübertragung nach Anspruch 1 oder 10,

dadurch gekennzeichnet, daß die Kegelräder (14, 16, 50, 52) im Sinter- oder Kaltfließpreßverfahren bzw. aus Kunststoff hergestellt sind.

13. Antriebsübertragung nach einem der Ansprüche 1 bis 12, **dadurch gekennzeichnet, daß**
    - zumindest ein Pufferraum (64) im Bereich zwischen dem zweiten Kegelrad (16) und dem dritten Kegelrad (50) vorhanden ist,
    - dieser Pufferraum (64) über eine Bohrung (66, 76) mit dem Hydrauliköl befüllbar ist,
    - der Rückfluß von Hydrauliköl aus dem Pufferraum (64) in die Bohrung zurück durch ein Rückschlagventil (68, 78) verhinderbar ist.

14. Antriebsübertragung nach Anspruch 13, **dadurch gekennzeichnet, daß** der Pufferraum ein die Welle (30) umgebender Ringraum (64) ist, der teilweise von einem schulterartigen Rücksprung (60) der Wandung der Welle (20) begrenzt ist.

15. Antriebsübertragung nach Anspruch 13, **dadurch gekennzeichnet, daß** der Ringraum (64) eine Öffnung nach außen in Form eines ihn umgebenden Spielspaltes (70) besitzt.

16. Antriebsübertragung nach Anspruch 14 oder 15, **dadurch gekennzeichnet, daß** der Ringraum (64) axial begrenzt wird von einer ersten Schulter (60) des mit der Welle (20) und dem dritten Zahnrad (50) fest verbundenen Lagerzapfens (36) sowie von einer zweiten Schulter (62) des Lagerblocks (38) für den Lagerzapfen (36).

17. Antriebsübertragung nach Anspruch 13 oder 14, **dadurch gekennzeichnet, daß**
    - zumindest eine Querbohrung (66) zwischen dem Pufferraum (64) un der Längsbohrung (42) der Welle (20) vorhanden ist,
    - vor der in den Pufferraum (64) einmündenden Öffnung der Querbohrung (66) ein Dichtkörper (68) so vorhanden ist
    - - daß bei konstanter Größe des Pufferraums (64), d. h., bei Nichtbewegen des Lagerzapfens (36) in axialer Richtung, das Hydrauliköl aus der Längsbohrung (42) der Welle (20) durch die Querbohrung (66) in den Pufferraum (64) hineinströmen kann und
    - - daß bei axialer Verstellung des Lagerzapfens (36), d. h., bei Kleinerwerden des Pufferraums (64), der Dichtkörper (68) so verformbar ist, daß durch ihn die Öffnung der Querbohrung (66) verschließbar ist.

18. Antriebsübertragung nach Anspruch 17, **dadurch gekennzeichnet, daß** bei einem Ringraum (64) als Pufferraum der Dichtkörper als ein die Welle umgebender O-Ring (68) ausgebildet ist.

19. Antriebsübertragung nach Anspruch 3, **dadurch gekennzeichnet, daß**
    - eine Bohrung (76) von außen in den Pufferraum (64) einmündet,
    - in dieser Bohrung (76) ein Rückschlagventil (78) so vorhanden ist, daß
    - - bei konstanter Größe des Pufferraums (64), d. h., bei Nichtbewegen des Lagerzapfens (36) in axialer Richtung, das Hydrauliköl aus dieser Bohrung (76) in den Pufferraum (64) hineinströmen kann und
    - - daß bei axialer Verstellung des Lagerzapfens (36), d. h. bei Kleinerwerden des Pufferraums (64), durch das Rückschlagventil (78) die Öffnung der Querbohrung (76) verschließbar ist.

FIG. 1

*Fig. 2*

*Fig. 3*

Europäisches
Patentamt

**EUROPÄISCHER
RECHERCHENBERICHT**

Nummer der Anmeldung

**EP 90 12 3186**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 749 893   (F.A.E. PORSCHE) <br> * das ganze Dokument * <br> – – – | 1 | F 16 <br> H 1/14 <br> F 01 L 1/02 |
| A | GB-A-2 810 61   (THE MINSTREL AND REA CYCLE COMP.) <br> * Seite 1, Zeilen 23 - 69; Figur 1 * <br> – – – | 1 | |
| A | FR-A-5 633 75   (S.A. DES ANCIENS ETABLISSEMENTS CHENARD ET WALCKER) <br> * das ganze Dokument * <br> – – – – – | 1 | |
| | | | **RECHERCHIERTE SACHGEBIETE (Int. Cl.5)** <br><br> F 16 H <br> F 02 B <br> F 01 L |

Der vorliegende Recherchenbericht wurde für alle Patentansprüche erstellt

| Recherchenort | Abschlußdatum der Recherche | Prüfer |
|---|---|---|
| Den Haag | 12 März 91 | HELMROTH H.P. |